# EUROPEAN PATENT APPLICATION

(11) **EP 2 312 889 A1**
(43) Date of publication of application: **20.04.2011**
(21) Application number: 10172140.5
(22) Date of filing: 06.08.2010
(51) Int. Cl.: H04W 48/12, H04W 52/02, H04W 16/32

(54) **Small base station and method for controlling operation thereof**

(30) Priority: 16.10.2009 KR 20090098751
(71) Applicant: Pantech Co., Ltd., Seoul 121-270 (KR)
(72) Inventor: Kim, Sung Kuk, 157-223, Seoul (KR); Nam, Seung Woo, 472-881, Gyeonggi-do (KR)
(74) Representative: Herzog, Markus

(57) **Abstract**

A small base station and a method for controlling an operation of the small base station provides that a first control unit of the small base station may control the small base station to be switched to an idle mode if a terminal is not located in a coverage of the small cell. If the small base station is switched to the idle mode, a communication unit of the small base station may transmit a signal about a base station cognitive channel so that the terminal may recognize the small cell.

## Description

### BACKGROUND

1. Field

The following description relates to a small base station and a method for controlling an operation of the small base station.

2. Discussion of the Background

A small cell technology may provide a communication service in a relatively small coverage compared to a coverage managed by a macro base station of a macro cell. A terminal located within a coverage of the small cell may use a mobile communication service via a small base station. Since the small cell supplements services in a shadow area of the macro cell, a user of the terminal located within a coverage of the small cell may use a continuous service at inexpensive costs.

However, when the small cell is installed in an indoor environment such as a shome, an office, and the like, interference may occur in an overlapping area between the small cell and the macro cell, or between the small cell and another cell small. Interference may deteriorate a service quality and may make cell planning difficult. In particular, even when the terminal located within the coverage of the small cell does not exist, a small base station included in the small cell may transmit a signal about an overhead channel every frame, and thus, the small base station may continuously or intermittently interfere with a small base station of a neighboring cell.

### SUMMARY

Exemplary embodiments of the present invention provide a small base station that may reduce interference between a small cell and a macro cell or interference between small cells, and may maintain a service continuity, and a method for controlling an operation of the small base station.

Additional features of the invention will be set forth in the description which follows, and in part will be apparent from the description, or may be learned by practice of the invention.

An exemplary embodiment of the present invention discloses a small base station including a control unit to control the small base station to be switched to an idle mode if a terminal is not located within a coverage of a small cell of the small base station, and a communication unit to transmit a signal about a base station cognitive channel so that the terminal recognizes the small cell if the small base station is in the idle mode.

An exemplary embodiment of the present invention discloses a method for controlling an operation of a small base station, the method including: switching the small base station to an idle mode if a terminal is not located within a coverage of a small cell of the small base station; and transmitting a signal about a base station cognitive channel so that the terminal recognizes the small cell, if the small base station is in the idle mode.

An exemplary embodiment of the present invention discloses a communication system, including: a macro base station, including a first communication unit and a first control unit; a small base station, including a second communication unit and a second control unit, the small base station located within a coverage of the macro base station; and a terminal in communication with at least one of the small base station and the macro base station, wherein the small base station is in an idle mode if the terminal is not located in a coverage of the small base station.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a communication system according to an exemplary embodiment of the present invention.

FIG. 2 is a block diagram illustrating a small base station and a macro base station of FIG. 1.

FIG. 3 is a flowchart illustrating a method for controlling an operation of a small base station according to an exemplary embodiment of the present invention.

FIG. 4 is a flowchart illustrating a method for controlling an operation of a small base station according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

Also, terms used herein are defined to appropriately describe the exemplary embodiments of the present invention and thus may be changed depending on a user, the intent of an operator, or custom. Accordingly, the terms must be defined based on the following overall description of this specification.

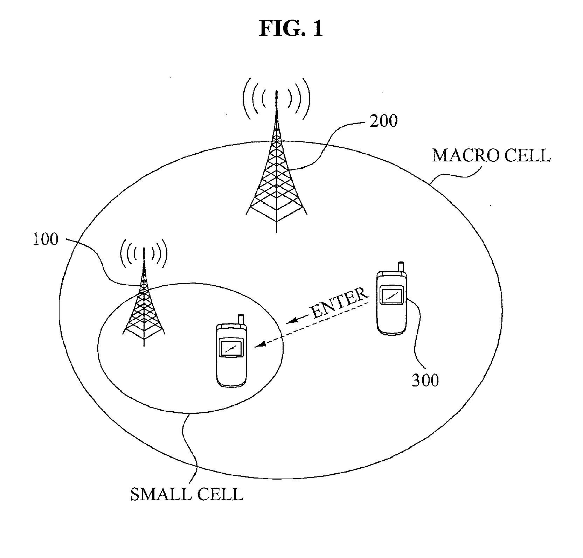

FIG. 1 is a diagram illustrating a communication system according to an exemplary embodiment of the present invention. Referring to FIG. 1, a small base station 100 may be installed within a coverage of a macro cell to have a coverage of a small cell. The small cell enables the small base station 100 to communicate with a terminal 300 within the coverage of the small cell. The macro cell enables a macro base station 200 to communicate with the terminal 300 within the coverage of the macro cell.

A plurality of small cells may be provided within a single macro cell. For example, the small base station 100 may include a femto base station, and the small cell may include a femto cell, a pico cell, a home node B, a home EnB, and the like.

The terminal 300 may be equipment capable of performing wired or wireless communication, for example, a mobile phone, a laptop, a personal computer (PC), a portable multimedia player (PMP), and the like, but aspects are not limited thereto.

As shown in FIG. 1, if the terminal 300 is not located within the coverage of the small cell, the small base station 100 may transmit a signal about a base station cognitive channel instead of a signal about an overhead channel in order to reduce interference between the small cell and the macro cell. The overhead channel and the base station cognitive channel will be described later. Accordingly, since the small base station 100 periodically transmits the signal about the base station cognitive channel and does not transmit a radio frequency (RF) signal every frame, it is possible to reduce interference between the small cell and the macro cell.

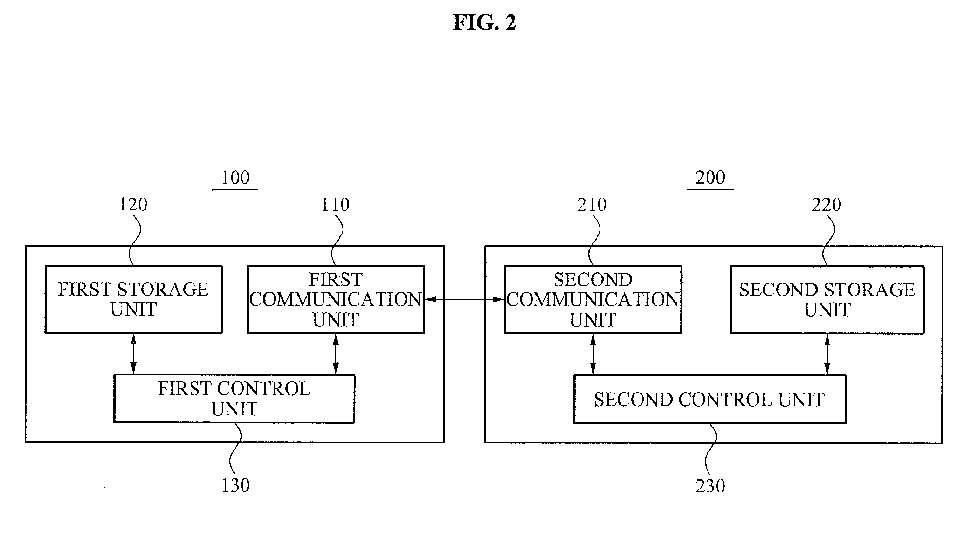

FIG. 2 is a block diagram illustrating the small base station 100 and the macro base station 200 of FIG. 1. The small base station 100 may include a first communication unit 110, a first storage unit 120, and a first control unit 130. The small base station 100 may be installed within a coverage of a corresponding small cell.

The first communication unit 110 may communicate wirelessly or through wires with the macro base station 200 and the terminal 300. If the small base station 100 is powered on and performs an initialization process, the first communication unit 110 may transmit a configuration request event to the macro base station 200, and may receive a configuration response event from the macro base station 200. The configuration request event denotes an event to request information used when the small base station 100 provides a communication function, for example, information used to set a frequency band. For example, the first communication unit 110 may transmit a different channel signal according to a mode of the small base station 100.

A program used to control and perform an operation of the small base station 100 may be stored in the first storage unit 120. A type of channel signal transmitted according to the mode of the small base station 100 may be stored for each corresponding mode.

Types of channels may include a dedicated channel corresponding to a general communication mode, a base station cognitive channel corresponding to an idle mode, and an overhead channel corresponding to an active mode.

The dedicated channel denotes a channel used for current communication among frequency bands assigned to the small base station 100. Information associated with the dedicated channel may include a frequency band of the dedicated channel.

The base station cognitive channel denotes a channel of a small size containing information enabling the terminal 300 to recognize the small cell. The base station cognitive channel may be of a minimum size to enable the terminal 300 to recognize the small base station 100. The base station cognitive channel may be a pilot channel or a synchronization channel. A signal about the base station cognitive channel may include at least one of frequency information, synchronization information, and ID information of the small cell. Accordingly, if the signal about the base station cognitive channel is transmitted, it is possible to decrease interference compared to a case in which a signal about the overhead channel is transmitted, i.e., signals about the base station cognitive channel generates less interference with the macro base station 200 than signals about the overhead channel.

The overhead channel denotes a channel excluding the dedicated channel and thus indicates an available channel for communication between the terminal 300 and the small base station 100. Information associated with the overhead channel may include communication information, such as location information of the small base station 100, frequency band information, and the like. The overhead channel may include a synchronization channel and a pilot channel.

The first control unit 130 may control a general operation of the small base station 100 using a stored program.

Hereinafter, a case in which the terminal 300 is not located within the coverage of the small cell and the terminal 300 does not communicate with the macro base station 200 will be described.

If the terminal 300 is not located within the coverage of the small cell, the first control unit 130 may control the small base station 100 to be switched to an idle mode. If the small base station 100 is switched to the idle mode, the first control unit 130 may verify, from the first storage unit 120, a base station cognitive channel corresponding to the idle mode. The first control unit 130 may control the first communication unit 110 to transmit the signal about the verified base station cognitive channel. The transmitted signal may be, for example, an RF signal.

If an active mode switching request to switch from the idle mode to an active mode is received by the small base station 100 from the macro base station 200 after a predetermined period of time, the first control unit 130 may control the small base station 100 to be switched from the idle mode to the active mode. The first control unit 130 may control the first communication unit 110 to transmit, to the macro base station 200, an event indicating that the small base station 100 is switched from the idle mode to the active mode. The first control unit 130 may verify, from the first storage unit 120, a channel corresponding to the active mode, i.e., the overhead channel, and may control the first communication unit 110 to transmit a signal about the overhead channel. The signal about the overhead channel may be in a form of an RF signal.

If the terminal 300 enters the coverage of the small cell, the terminal 300 may receive the overhead channel. If information contained in the received overhead channel satisfies a cell reselection condition, the terminal 300 may hand over communication of the terminal 300 to the small cell.

The macro base station 200 may include a second communication unit 210, a second storage unit 220, and a second control unit 230. The macro base station 200 may be installed within a coverage of a corresponding macro cell.

The second communication unit 210 may communicate wirelessly or through wires with the small base station 100 and may also communicate wirelessly or through wires with the terminal 300. If a configuration request event is received from the first communication unit 110 of the small base station 100, the second communication unit 210 may transmit a configuration response event to the first communication unit 110. The second storage unit 220 may store Closed Subscriber Group (CSG) information. The CSG information may include identifications (IDs) of equipment allowed to communicate with the small base station 100 and/or the macro base station 200.

If the signal about the base station cognitive channel transmitted from the first communication unit 110 is received by the macro base station 200, the second control unit 230 may determine that the small base station 100 is to enter the idle mode. When an active mode switching request is received from the terminal 300, the second control unit 230 may verify whether the terminal 300 corresponds to a CSG member. For this, the second control unit 230 may control the second communication unit 210 to request an ID of the terminal 300, and receive the ID of the terminal 300 from the terminal 300.

When the ID of the terminal 300 is included in the CSG information stored in the second storage unit 220, the second control unit 230 may determine the terminal 300 as the CSG member, and may control the second communication unit 210 to send a request to the first communication unit 110 of the small base station 100 to switch the small base station 100 from the idle mode to the active mode. When the first communication unit 110 transmits a report to the macro base station 200 that the small base station 100 has switched from the idle mode to the active mode, the second control unit 230 may report to the terminal 300 that the small cell is activated. Accordingly, the terminal 300 may receive the signal about the overhead channel from the small base station 100 to hand over communication of the terminal 300 to the small cell.

Hereinafter, a case where the terminal 300 is not located within the coverage of the small cell and the terminal 300 performs data communication with the macro base station 200 will be described with reference to FIG. 2.

When the terminal 300 is not located within the coverage of the small cell, the small base station 100 may not operate in an active mode. The first control unit 130 may control the first communication unit 110 to periodically transmit a signal about a base station cognitive channel. The base station cognitive channel may be a synchronization channel containing frequency information or synchronization information. The information may be transmitted in a form of an RF signal.

When an active mode switching request is received from the macro base station 200 after a period of time, the first control unit 130 may control the small base station 100 to be switched from the idle mode to the active mode, and may control the first communication unit 110 to report to the macro base station 200 that the small base station 100 is switched from the idle mode to the active mode. The terminal 300 may be handed over from the macro base station 200 to the small base station 100 according to a handover process of the macro base station 200.

While the terminal 300 is connected to the macro base station 200 to communicate with the macro base station 200, the second communication unit 210 may receive from the terminal 300 information associated with a connection state. Information associated with the connection state indicates a measurement result of a reception strength, such as a Received Signal Strength Indication (RSSI). The terminal 300 may scan the signal about the base station cognitive channel broadcast from the small base station 100 to measure a reception strength of the small base station 100, and measure a reception strength with the macro base station 200, and then may provide the measured reception strength to the second communication unit 210.

The second control unit 230 may determine whether to hand over the terminal 300 based on the connection state of the terminal 300. For example, when the reception strength measured from the signal from the small base station 100 about the base station cognitive channel, for example, an RF signal is greater than the reception strength with the macro base station 200, the second control unit 230 may determine whether a condition to hand over to the small cell is satisfied. If the condition is satisfied, the second control unit 230 may verify whether the terminal 300 corresponds to a CSG member.

If the terminal 300 is verified as the CSG member, the second control unit 230 may send a request to the first communication unit 110 to switch the small base station 100 from the idle mode to the active mode, and may receive from the first communication unit 110 a report that the small base station 100 is switched from the idle mode to the active mode.

If the terminal 300 is determined to be handed over to the small cell, the second control unit 230 may perform a handover process. Specifically, when the small base station 100 of the small cell is switched from the idle mode to the active mode, the terminal 300 may be handed over from the macro cell to the small cell.

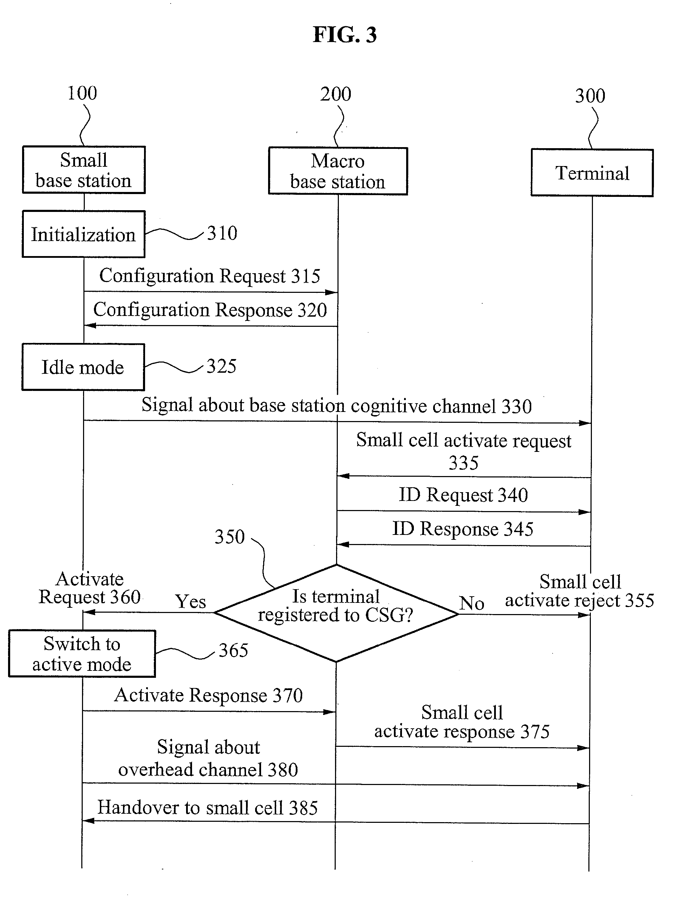

FIG. 3 is a flowchart illustrating a method for controlling an operation of the small base station 100 according to an exemplary embodiment of the present invention. Referring to FIG. 1, FIG. 2, and FIG. 3, if the small base station 100 is powered on and performs an initialization process in operation 310, the first communication unit 110 may transmit a configuration request event to the macro base station 200 in operation 315. In operation 320, the first communication unit 110 may receive a configuration response event from the macro base station 200.

In operation 325, if the terminal 300 is not located within a coverage of a small cell, the first control unit 130 may control the small base station 100 to be switched to an idle omode.

In operation 330, the first control unit 130 may control the small communication unit to periodically transmit a signal about a base station cognitive channel. The signal about the base station cognitive channel may be in a form of an RF signal. Thus, the first control unit 130 may not transmit a signal about the overhead channel every frame, which may result in decreasing interference with the macro base station 200 and power consumption of the small base station 100. In this instance, the macro base station 200 may provide the terminal 300 with a System Information Block (SIB) containing femto cell neighbor information (not shown). The SIB may include a cell ID, location information, a physical layer type, frequency information, and the like.

If the terminal 300 approaches the coverage of the small cell and receives the signal about the base station cognitive channel from the small base station 100, the terminal 300 may measure a reception level, that is, a reception strength. If the reception level is higher than a reference value, which may be pre-set, the terminal 300 may request the macro base station 200 to activate the small cell, that is, to switch the small base station from the idle mode to the active mode in operation 335.

To verify whether the terminal 300 requesting the activation of the small cell is included in CSG information, the macro base station 200 may request an ID of the terminal 300 in operation 340, and receive the ID from the terminal 300 in operation 345.

In operation 350, the macro base station 200 may determine whether the ID of the terminal 300 is included in the CSG information in operation 350. If the ID of the terminal 300 is not included, the macro base station 200 may reject the activate request in operation 355.

Conversely, if the ID of the terminal 300 is included in the CSG information as determined in operation 350, the macro base station 200 may request the first communication unit 110 to activate the small cell, that is, to switch the small base station 100 from the idle mode to the active mode in operation 360.

In operation 365, the first control unit 130 may control the small base station 100 to be switched from the idle mode to the active mode according to the request of the macro base station 200

In operation 370, the first control unit 130 may transmit an activate response to the macro base station 200, that is, may report to the macro base station 200 that the small base station 100 is switched from the idle mode to the active mode. In operation 375, the macro base station 200 may report to the terminal 300 that the small cell is activated.

In operation 380, since a current mode of the small base station 100 is the active mode, the first control unit 130 may control the first communication unit 110 to transmit the signal about the overhead channel.

In operation 385, the terminal 300 may receive and parse the signal about the overhead channel, and may hand over to the small cell when the overhead channel satisfies a cell reselection condition based on the parsing result.

Through the above process, the terminal 300 may receive the overhead channel from the small base station 100 and hand over to the small cell.

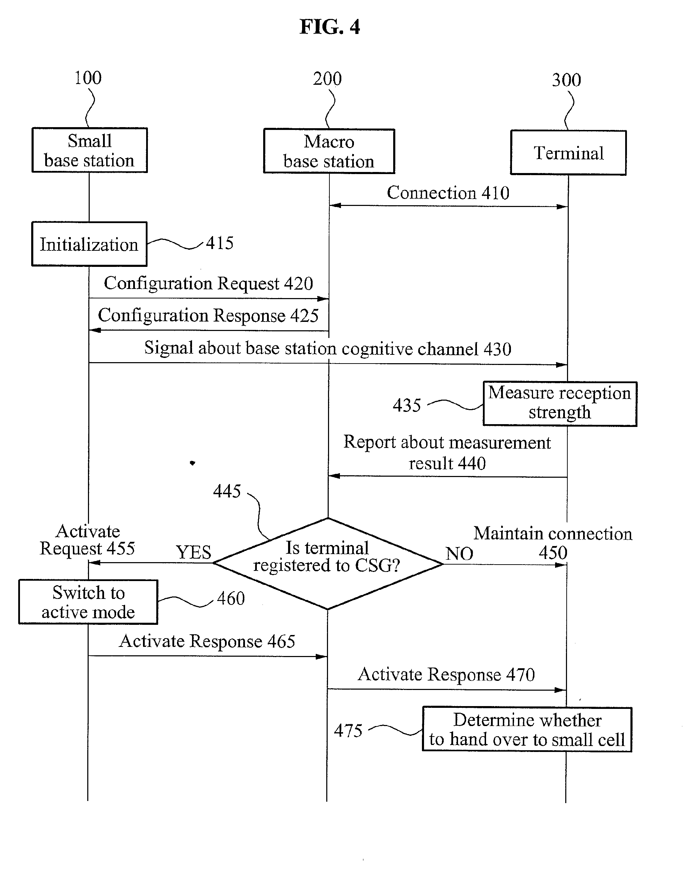

FIG. 4 is a flowchart illustrating a method for controlling an operation of the small base station 100 according to an exemplary embodiment of the present invention. Referring to FIG. 1, FIG. 2, and FIG. 3, in operation 410, the macro base station 200 and the terminal 300 may be connected to communicate with each other. If the macro base station 200 assigns a channel for communication to the terminal 300, the terminal 300 may be in a dedicated mode.

If the small base station 100 is powered on and performs an initialization process in operation 415, the small communication unit 100 may transmit a configuration request event to the macro base station 200 in operation 420, and may receive a configuration response event from the macro base station 200 in operation 425.

If the terminal 300 is determined to be located outside a coverage of a small cell, the first control unit 130 may control the first communication unit 110 to transmit, that is, broadcast a signal about a base station cognitive channel in operation 430.

In operation 435, the terminal 300 may scan the broadcast signal about the base station cognitive channel to measure a connection state with the small base station 100 and a connection state with the currently connected macro base station 200. The connection state may indicate, for example, a reception strength.

In operation 440, the terminal 300 may report to the macro base station 200 about the measured reception strength and/or the reception strength measured from the base station cognitive channel. Accordingly, the macro base station 200 may determine the terminal 300 requests handover to the small base station 100.

In operation 445, the macro base station 200 may analyze the reported measurement result. If the reception strength measured from the base station cognitive strength satisfies a condition of handover to the small cell, the macro base station 200 may verify whether the terminal 300 corresponds to a CSG member.

Since the macro base station 200 and the terminal 300 are connected to each other, the macro base station 200 may be aware of an ID of the terminal 300. Accordingly, the macro base station 200 may determine whether the terminal 300 is registered to a CSG using the ID of the terminal 300.

If the ID of the terminal 300 is unregistered, the macro base station 200 may maintain a connection without handing over the terminal 300 to the small cell in operation 450.

Conversely, if the ID of the terminal 300 is registered, the macro base station 200 may request the small base station 100 to switch to an active mode in operation 455.

In operation 460, the first control unit 130 may control the small base station 100 to be switched to the active mode according to the request of the macro base station 200.

In operation 465, the first control unit 130 may report to the macro base station 200 that the small base station 100 is switched to the active mode. In operation 470, the macro base station 200 may report to the terminal 300 that the small cell is activated, that is, that the small base station 100 is switched to the active mode.

In operation 475, when the small cell is activated, the terminal 300 may determine whether to hand over to the small cell, and may perform a handover process according to the determination result. The handover process may be the same as or similar to a process employed in a Long Term Evolution (LTE) system or an 802.16 system, but aspects are not limited thereto such that other handover processes may be employed.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media, such as hard disks, floppy disks, and magnetic tape; optical media, such as CD-ROM disks and DVD; magneto-optical media, such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A small base station and a method for controlling an operation of the small base station provides that a first control unit of the small base station may control the small base station to be switched to an idle mode if a terminal is not located in a coverage of the small cell. If the small base station is switched to the idle mode, a communication unit of the small base station may transmit a signal about a base station cognitive channel so that the terminal may recognize the small cell.

## Claims

1. A small base station, comprising:
a control unit to control the small base station to be switched to an idle; and
a communication unit to transmit a signal about a base station cognitive channel if the small base station is in the idle mode.

2. The small base station of claim 1, wherein the signal about the base station cognitive channel comprises at least one of frequency information and synchronization information.

3. The small base station of claim 1, wherein:
the communication unit receives an active mode switching request from a macro base station of a macro cell, the small base station corresponding to a small cell being in a coverage of the macro cell, and
the control unit controls the small base station to be switched from the idle mode to an active mode in response to receiving the active mode switching request.

4. The small base station of claim 3, wherein if the macro base station receives the active mode switching request from a terminal, the macro base station transmits the active mode switching request to the communication unit.

5. The small base station of claim 4, wherein if the terminal receives the signal about the base station cognitive channel and determines that the terminal has entered the coverage of the small cell, the terminal requests the macro base station to request the small base station to switch to the active mode.

6. The small base station of claim 3, wherein if the small base station is switched from the idle mode to the active mode, the first control unit controls the communication unit to transmit a signal about an overhead channel.

7. The small base station of claim 6, wherein the terminal performs a cell selection using the signal about the overhead channel.

8. The small base station of claim 3, wherein if a terminal is connected to the macro base station of the macro cell, the macro base station determines handover according to a reception strength measured by the terminal, and requests the communication unit to switch to the active mode if a reception strength condition is satisfied.

9. The small base station of claim 8, wherein if the small base station is switched from the idle mode to the active mode, the terminal hands over from the macro cell to the small cell.

10. A method for controlling an operation of a small base station, the method comprising:
setting a mode of the small base station to an idle mode; and
transmitting a signal about a base station cognitive channel if the small base station is in the idle mode.

11. The method of claim 10, further comprising:
receiving an active mode switching request from a macro base station of a macro cell, the small base station corresponding to a small cell being in a coverage of the macro cell, and
switching the small base station from the idle mode to an active mode in response to receiving the active mode switching request.

12. The method of claim 11, wherein if the macro base station receives the active mode switching request from a terminal, the macro base station transmits the active mode switching request to the small base station.

13. The method of claim 12, wherein if the terminal receives the signal about the base station cognitive channel and determines that the terminal has entered the coverage of the small cell, the terminal requests the macro base station to request the small base station to switch to the active mode.

14. The method of claim 11, further comprising:
transmitting a signal about an overhead channel if the small base station is switched from the idle mode to the active mode.

15. The method of claim 11, further comprising:
handing over the terminal from the macro cell to the small cell if the small base station is switched from the idle mode to the active mode.
